# EUROPÄISCHE PATENTSCHRIFT

(11) **EP 1 457 299 B1**
(45) Veröffentlichungstag und Bekanntmachung des Hinweises auf die Patenterteilung: **23.08.2006**
(21) Anmeldenummer: 04002371.5
(22) Anmeldetag: 03.02.2004
(51) Int. Cl.: B27B 9/04, B23Q 9/00, B27G 19/10

(54) **Führungsschiene mit Spanreissschutz**
Guide rail with splintering protection
Rail de guidage avec protection des éclats

(30) Priorität: 10.03.2003 DE 20303761 U
(43) Veröffentlichungstag der Anmeldung: 15.09.2004
(73) Patentinhaber: Mafell AG, 78727 Oberndorf a.N. (DE)
(72) Erfinder: Eisenbeis, Dieter, 72160 Horb a.N. (DE)
(74) Vertreter: Manitz, Finsterwald & Partner GbR

(56) Entgegenhaltungen:
- EP-A- 0 712 686
- DE-U- 29 703 263
- US-A- 4 539 881

## Beschreibung

Die Erfindung betrifft eine Führungsschiene für elektrische Bearbeitungsmaschinen, insbesondere für Handkreissägen, Stichsägen und Oberfräsen, deren Oberseite als Führung für die Bearbeitungsmaschine, insbesondere für eine Maschinengrundplatte, ausgebildet ist und die mit ihrer Unterseite am zu bearbeitenden Werkstück anlegbar ist, und die an ihrer der Schneidebene zugewandten Seite einen Spanreißschutz in Form einer elastischen Lippe aufweist. Eine Führungsschiene gemäß dem Oberbegriff ist aus der US 4539881 bekannt.

Bei Führungsschienen dieser Art ist es bekannt, randseitig eine als Spanreißschutz wirkende Gummilippe vorzusehen. Beim Aufsetzen der Bearbeitungsmaschine auf die Führungsschiene wird diese Gummilippe über die Führungsschiene gegen das jeweils zu schneidende Werkstück gedrückt und trägt dann dazu bei, dass bei Durchführung des jeweiligen Schnittes störenden Ausrissen entgegengewirkt wird.

Aufgabe der vorliegenden Erfindung ist es, den Spanreißschutz generell und insbesondere im Zusammenhang mit solchen flexiblen Führungsschienen zu verbessern, wie sie in der nicht vorveröffentlichten deutschen Patentanmeldung 102 20 363.3 beschrieben sind.

Ausgehend von einer Führungsschiene der eingangs angegebenen Art wird die gestellte Aufgabe nach der Erfindung gelöst durch eine Führungsschiene gemäß Anspruch 1. .

Durch die gezielte Schaffung eines im praktischen Einsatz der Schnittebene unmittelbar benachbarten Kompressionsabschnitts, der direkt von der Bearbeitungsmaschine bzw. deren Grundplatte mit Kraft beaufschlagt wird, gelingt es, die Lippe im für die Erzielung eines Ausreißschutzes maßgeblichen Bereich unmittelbar angrenzend an die Schnittebene optimal am Werkstück zur Anlage zu bringen, und zwar auch dann, wenn das Werkstück gewisse Oberflächenunebenheiten aufweist, wie dies üblicherweise der Fall ist.

Vorzugsweise ist an der Unterseite der Schiene eine Antirutschschicht in Form eines Profilgummiauftrags vorgesehen, wobei die Höhe dieser Antirutschschicht zumindest im wesentlichen der Höhe des Trägerabschnitts der Lippe entspricht, auf dem die Schiene aufliegt und an dem sie vorzugsweise durch Verkleben befestigt ist.

Der Überstand des Kompressionsabschnitts über die flexible Schiene nach oben liegt vorzugsweise im Bereich von etwa 0,05 mm bis 0,45 mm und beträgt zweckmäßigerweise etwa 0,15 bis 0,30 mm.

Nach einer bevorzugten Ausgestaltung der Erfindung wird als Schiene eine flexible Schiene aus rostfreiem Stahl mit einer Dicke von etwa 0,40 mm verwendet, und in diesem Falle beträgt die Dicke bzw. Höhe des Kompressionsabschnitts etwa 1,2 ± 0,2 mm und die Dicke bzw. Höhe des Trägerabschnitts etwa 0,5 ± 0,1 mm.

Bei Verwendung dieser Dimensionen wird zum einen eine Überführung der Schiene aus einer langgestreckten Benutzungskonfiguration in eine kompakte Transport- und/oder Aufbewahrungskonfiguration durch den Spanreißschutz in keiner Weise beeinträchtigt und zum anderen in der Arbeitsstellung der Schiene der verbesserte Spanreißschutz voll erreicht bzw. gewährleistet.

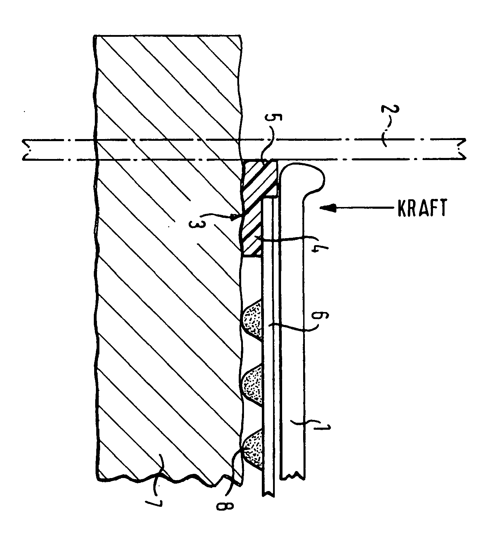

Weitere vorteilhafte Ausgestaltungen der Erfindung sind in den Unteransprüchen angegeben und werden anhand der Beschreibung des Ausführungsbeispiels unter Bezugnahme auf die Zeichnung erläutert.

Die einzige Figur der Zeichnung zeigt in schematischer Darstellung eine mit Spanreißschutz ausgestattete Führungsschiene nach der Erfindung im Moment des Beginns des Zusammenwirkens mit einer Bearbeitungsmaschine zur Durchführung eines Schnittes durch ein Werkstück.

In der Zeichnung ist die Bearbeitungsmaschine, bei der es sich bevorzugt um Handkreissägen, Stichsägen und Oberfräsen handelt, nicht gezeigt, sondern lediglich die zur betreffenden Bearbeitungsmaschine gehörende Grundplatte 1 sowie das zur Bearbeitungsmaschine gehörende, strichpunktiert gezeigte Sägeblatt 2.

Zur Durchführung eines Schnittes wird die Führungsschiene 6 auf das betreffende Werkstück 7, das im Regelfall eine nicht ganz ebene Oberfläche besitzt, aufgesetzt, so dass dann der gewünschte Schnitt längs der Führungsschiene durchgeführt werden kann.

Die Führungsschiene 6 besteht gemäß Ausführungsbeispiel aus einem flexiblen Federstahl mit einer Dicke von etwa 0,40 mm, so dass diese Schiene aus Ihrer langgestreckten Benutzungskonfiguration, d.h. aus der Konfiguration, die sie bei Durchführung von Schnitten einnimmt, in eine kompakte Transport- und/oder Aufbewahrungskonfiguration überführt, d.h. insbesondere aufgerollt werden kann, wie dies im Einzelnen in der deutschen Patentanmeldung 102 20 363.6 beschrieben ist.

Diese flexible Führungsschiene 6 ist randseitig mit einem Spanreißschutz in Form einer flexiblen Lippe 3 versehen, und zwar vorzugsweise beidseitig.

Diese flexible Lippe 3 besteht bevorzugt aus einem Gummimaterial geeigneter Härte bzw. Elastizität, wobei die Härte beispielsweise im Bereich von etwa 70 bis 90 Shore gelegen sein kann.

Die Lippe 3 wird gebildet von einem Trägerabschnitt 4 und einem Kompressionsabschnitt 5, wobei sich der Kompressionsabschnitt 5 randseitig an den zur Aufnahme und Befestigung der Schiene 6 dienenden Trägerabschnitt 4 anschließt.

Bezogen auf eine Dicke der Schiene von etwa 0,40 mm beträgt die Dicke bzw. Höhe des Kompressionsabschnitts 5 etwa 1,2 mm und die Dicke bzw. Höhe des unterhalb der Schiene 6 gelegenen Trägerabschnitts etwa 0,5 mm. Etwa gleiche Dicke bzw. Höhe wie der Trägerabschnitt 4 besitzt ein an der Unterseite der Schiene 6 vorgesehener Antirutschbelag 8. Dieser Antirutschbelag wird bevorzugt durch direktes Aufbringen von profilgebenden Gummimaterialien realisiert, die zweckmäßigerweise so gestaltet bzw. angeordnet werden, dass das Aufrollen der Schiene 6 nicht beeinträchtigt wird. Die Kompressibilität dieser Profilgummielemente 8 kann der Kompressibilität des Trägerabschnitts 4 der Lippe 3 entsprechen.

Die Gummilippe 3 wird zunächst so gefertigt und an der Schiene 6 angebracht, dass der Kompressionsabschnitt 5 Überbreite besitzt. Bei Ausführung des ersten Schnittes unter Verwendung der Führungsschiene wird die Breite des Kompressionsabschnitts 5 durch das Sägeblatt 2 auf die exakte Sollbreite gebracht, so dass dann bei allen folgenden Schnitten der Kompressionsabschnitt 5 der Lippe 3 stets unmittelbar angrenzend an das Sägeblatt 2 zu liegen kommt und damit seine ausrißverhindernde Funktion voll zur Wirkung kommen kann.

Wesentlich für die Funktion des erfindungsgemäßen Spanreißschutzes ist, dass nach dem Anlegen der Führungsschiene 6 an die jeweils gewünschte Schnittlinie und dem Aufsetzen der Bearbeitungsmaschine auf die Führungsschiene 6 der Kompressionsabschnitt 5 unmittelbar durch die Maschinengrundplatte 1 beaufschlagt wird. Die dadurch wirksam werdende Kraftkomponente bewirkt ein optimales Anpressen der Dichtlippe 3 bzw. des Kompressionsabschnitts 5 an das Werkstück 7 im unmittelbar an die Schnittlinie angrenzenden Bereich.

Aufgrund dieser speziell erzeugten und während des Anliegens der Maschinengrundplatte 1 an der Führungsschiene 6 aufrechterhaltenen Anpresskraft liegt die Lippe 3 auch dann stets vollflächig an dem Werkstück 7 an, wenn dieses Werkstück gewisse Oberflächenunebenheiten aufweist. Durch dieses vollflächige und exakte Anliegen auch bei Werkstücken mit Oberflächenunebenheiten wird sichergestellt, dass stets äußerst exakte Schnitte ohne jegliche Ausreißeffekte erzielt werden können.

### Bezugszeichenliste

- 1: Maschinengrundplatte
- 2: Sägeblatt
- 3: Lippe
- 4: Trägerabschnitt der Lippe
- 5: Kompressionsabschnitt der Lippe
- 6: flexible Schiene
- 7: Werkstück
- 8: Antirutschbelag

## Patentansprüche

1. Führungsschiene für elektrische Bearbeitungsmaschinen, insbesondere für Handkreissägen, Stichsägen und Oberfräsen, deren Oberseite als Führung für die Bearbeitungsmaschine, insbesondere für eine Maschinengrundplatte, ausgebildet ist und die mit ihrer Unterseite am zu bearbeitenden Werkstück anlegbar ist, und die an ihrer der Schneidebene zugewandten Seite einen Spanreißschutz in Form einer elastischen Lippe aufweist, wobei
die insbesondere elastisch ausgebildete Schiene (6) randseitig auf einem Trägerabschnitt (4) der Lippe (3) abgestützt und befestigt ist, **dadurch gekennzeichnet,**
**dass** sich an den Trägerabschnitt (4) der Lippe (3) zur Schnittebene hin ein nach oben über die Schiene (6) überstehender Kompressionsabschnitt (5) anschließt, der über die Bearbeitungsmaschine, bzw. deren Grundplatte (1) mit Druck beaufschlagbar ist.

2. Führungsschiene nach Anspruch 1,
**dadurch gekennzeichnet,**
**dass** an der Unterseite der Schiene (6) eine Antirutschschicht, insbesondere in Form von Profilgummibereichen vorgesehen ist, deren Höhe etwa der Höhe der Trägerschicht (4) der Lippe (3) entspricht.

3. Führungsschiene nach Anspruch 1 oder 2,
**dadurch gekennzeichnet,**
**dass** die Lippe (3) aus einem gummielastischen Werkstoff (TPE) mit einer Härte im Bereich von etwa 80 ± 5 Shore besteht.

4. Führungsschiene nach einem der vorhergehenden Ansprüche,
**dadurch gekennzeichnet,**
**dass** der Überstand des Kompressionsabschnitts (5) über die flexible Schiene (6) nach oben im Bereich von etwa 0,05 mm bis 0,45 mm gelegen ist.

5. Führungsschiene nach einem der Ansprüche 1 bis 3,
**dadurch gekennzeichnet,**
**dass** der Überstand des Kompressionsabschnitts (5) über die flexible Schiene (6) nach oben im Bereich von etwa 0,15 mm bis 0,30 mm gelegen ist.

6. Führungsschiene nach einem der vorhergehenden Ansprüche,
**dadurch gekennzeichnet,**
**dass** die senkrecht zur Schneidebene gemessene Breite des Kompressionsabschnitts (5) geringer ist als die Breite der Auflagefläche der Schiene (6) auf den Trägerabschnitt (4).

7. Führungsschiene nach einem der vorhergehenden Ansprüche,
**dadurch gekennzeichnet,**
**dass** die Dicke der insbesondere aus rostfreiem Federstahl bestehenden flexiblen Schiene (6) etwa 0,40 mm, die Dicke bzw. Höhe des Kompressionsabschnitts (5) etwa 1,2 ± 0,2 mm und die Dicke bzw. die Höhe des Trägerabschnitts (4) etwa 0,5 ± 0,1 mm beträgt.

8. Führungsschiene nach einem der vorhergehenden Ansprüche,
**dadurch gekennzeichnet,**
**dass** die Schiene (6) mit der Lippe (3) verklebt ist.

9. Führungsschiene nach einem der vorhergehenden Ansprüche,
**dadurch gekennzeichnet,**
**dass** die Lippe (3) bei Durchführung des ersten unter Verwendung der Schiene (6) erfolgenden Schneidvorgangs stirnseitig beschnitten und dadurch die endgültige Form des Kompressionsabschnitts (5) festgelegt wird.

## Claims

1. A guide rail for electrical machining tools, in particular for handheld circular saws, jigsaws and routers, whose upper side is made as a guide for the machining tool, in particular for a tool base plate, and whose lower side can be placed at the workpiece to be machined, and which has an anti-splintering device in the form of an elastic lip at its side facing the cutting plane, wherein the rail (6), which is in particular elastic, is supported at and fastened to a carrier section (4) of the lip (3) at the marginal side;
**characterised in that**
a compression section (5) adjoins the carrier section (4) of the lip (3), projects upwardly beyond the rail (6) towards the cutting plane and can have pressure applied to it via the machining tool or its base plate (1).

2. A guide rail in accordance with claim 1, **characterised in that** an anti-slip layer, in particular in the form of profiled rubber regions, is provided at the lower side of the rail (6) and its height approximately corresponds to the height of the carrier layer (4) of the lip (3).

3. A guide rail in accordance with claim 1 or claim 2, **characterised in that** the lip (3) consists of a rubber elastic material (TPE) having a hardness in the range from approximately 80 ± 5 Shore.

4. A guide rail in accordance with any one of the preceding claims, **characterised in that** the upward projection of the compression section (5) beyond the flexible rail (6) lies in the range from approximately 0.05 mm to 0.45 mm.

5. A guide rail in accordance with any one of the claims 1 to 3, **characterised in that** the upward projection of the compression section (5) beyond the flexible rail (6) lies in the range from approximately 0.15 mm to 0.30 mm.

6. A guide rail in accordance with any one of the preceding claims, **characterised in that** the width of the compression section (5) measured perpendicular to the cutting plane is smaller than the width of the contact surface of the rail (6) on the carrier section (4).

7. A guide rail in accordance with any one of the preceding claims, **characterised in that** the thickness of the flexible rail (6), which in particular consists of stainless spring steel, amounts to approximately 0.40 mm; the thickness or height of the compression section (5) to approximately 1.2 ± 0.2 mm; and the thickness or the height of the carrier section (4) to approximately 0.5 ± 0.1 mm.

8. A guide rail in accordance with any one of the preceding claims, **characterised in that** the rail (6) is adhesively bonded to the lip (3).

9. A guide rail in accordance with any one of the preceding claims, **characterised in that** the lip (3) is cut at the end face on the execution of the first cutting procedure taking place using the rail (6) and the final shape of the compression section (5) is thereby fixed.

## Revendications

1. Rail de guidage pour machines d'usinage électriques, en particulier pour scies circulaires portatives, scies sauteuses et défonceuses, dont la face supérieure est réalisée sous forme de guidage pour la machine d'usinage, en particulier pour une plaque de base de machine et qui, avec sa face inférieure, peut être appliqué sur la pièce à oeuvrer, et lequel présente sur sa face tournée vers le plan de coupe, une protection vis-à-vis des éclats de matière sous forme de lèvre élastique, le rail (6) réalisé en particulier élastique est soutenu et fixé côté bord sur un tronçon de support (4) de la lèvre (3), **caractérisé en ce que**
en direction vers le plan de coupe, un tronçon de compression (5) dépassant le rail (6) vers le haut se raccorde au tronçon de support (4) de lèvre (3), tronçon de compression qui est sollicité en pression par la machine d'usinage ou par sa plaque de base (1), respectivement.

2. Rail de guidage selon la revendication 1,
**caractérisé en ce que**
sur la face inférieure du rail (6) est prévue une couche antidérapante, en particulier sous forme de zones de caoutchouc profilé, dont la hauteur correspond approximativement à la hauteur de la couche de support (4) de la lèvre (3).

3. Rail de guidage selon la revendication 1 ou 2,
**caractérisé en ce que**
la lèvre (3) est constituée en une matière présentant l'élasticité du caoutchouc (TPE) avec une dureté dans la plage d'approximativement 80 ± 5 Shore.

4. Rail de guidage selon l'une des revendications précédentes,
**caractérisé en ce que**
le dépassement du tronçon de compression (5) au-dessus du rail flexible (6) vers le haut est situé dans la plage d'environ 0,05 mm à 0,45 mm.

5. Rail de guidage selon l'une des revendications précédentes,
**caractérisé en ce que**
le dépassement du tronçon de compression (5) au-dessus du rail flexible (6) vers le haut est situé dans la plage d'environ 0,15 mm à 0,30 mm.

6. Rail de guidage selon l'une des revendications précédentes,
**caractérisé en ce que**
la largeur du tronçon de compression (5), mesurée perpendiculairement au plan de coupe, est inférieure à la largeur de la surface d'appui du rail (6) sur le tronçon de support (4).

7. Rail de guidage selon l'une des revendications précédentes,
**caractérisé en ce que**
l'épaisseur du rail flexible (6) constitué en particulier en acier à ressort inoxydable est d'environ 0,40 mm, l'épaisseur et la hauteur, respectivement, du tronçon de compression étant d'environ 1,2 ± 0,2 mm et l'épaisseur et la hauteur, respectivement, du tronçon de support (4) étant d'environ 0,5 ± 0,1 mm.

8. Rail de guidage selon l'une des revendications précédentes,
**caractérisé en ce que**
le rail (6) est collé avec la lèvre (3).

9. Rail de guidage selon l'une des revendications précédentes,
**caractérisé en ce que**
lors de la première opération de coupe ayant lieu en utilisant le rail (6), la lèvre (3) est coupée côté frontal en déterminant ainsi la forme définitive du tronçon de compression (5).
